# EUROPEAN PATENT APPLICATION

(11) **EP 2 139 229 A1**
(43) Date of publication of application: **30.12.2009**
(21) Application number: 08715205.4
(22) Date of filing: 11.03.2008
(51) Int. Cl.: H04N 5/445, H04N 7/173, H04N 7/14

(54) **AN IPTV SYSTEM, MEDIA SERVER, AND IPTV PROGRAM SEARCH AND LOCATION METHOD**

(30) Priority: 22.03.2007 CN 200710073613
(71) Applicant: Huawei Technologies Co., Ltd., Longgang District, Shenzhen Guangdong 518129 (CN)
(72) Inventor: HE, Zhiqin, Shenzhen Guangdong 518129 (CN)
(74) Representative: Körber, Martin Hans
(86) International application number: PCT/CN2008/070469
(87) International publication number: WO 2008/113287

(57) **Abstract**

An IPTV system, a media server, and methods of searching for and locating an IPTV program are disclosed. The method of searching for a program includes: searching for corresponding media information according to media content information sent from a user terminal device, and returning the found media information to the user terminal device for a user to make a selection. The method of locating a program includes: performing a search according to media content information sent from a user terminal device, and playing the media from the position of a found media content if the found media content matches the media content information. The advantageous technical effects of the present invention are to effectively satisfy the need by the user to search for or locate a program of interest from a program source and to avoid a long, inefficient program searching process.

## Description

### FIELD OF THE TECHNOLOGY

The present invention relates to the field of IPTV, and in particular, to an IPTV system, a media server, and methods of searching for and locating an IPTV program.

### BACKGROUND OF THE INVENTION

IPTV is a value-added data service with "TV set and set-top box" as its primary terminal device, which provides interactive TV and multimedia services for users via an IP-based data network.

Due to a strong capability to interact with users, IPTV provides an excellent basis for improving the service experience for TV users. Based on that, a large variety of different value-added services have been developed. Thus, the original service provisioning mode has changed so that, instead of passively accepting a program as in the past, a user has come to be able to order a program of his/her interest, and manage the time when the program is to be played freely.

When a user uses an IPTV service, the program sources may be assorted and listed at the side of a media server. The user may make a selection by level, browse within massive programs to look for a program source according to his/her interest. Some existing IPTV systems, however, do not have a search function. The user has to perform a number of operations to find a program that he/she likes, and thus the user cannot find a program source quickly.

Some other existing IPTV systems provide functions of searching for and locating program title, actor/actress, director, program introduction, and the like, but do not have a searching mechanism within program content. The user cannot find a program source of interest quickly using the above IPTV systems.

### SUMMARY OF THE INVENTION

Various embodiments of the present invention provide an IPTV system, a media server, and methods of searching for and locating an IPTV program to solve the problem in the prior art that a user cannot find a program source quickly.

A method of searching for an IPTV program provided in one embodiment of the present invention includes: searching for corresponding media information according to media content information sent from a user terminal device, and returning the found media information to the user terminal device for a user to make a selection.

An IPTV system provided in one embodiment of the present invention includes: a user terminal device and a media server. The user terminal device is configured to receive media content information inputted by a user and to send the media content information to the media server. The media server is configured to search for corresponding media information according to the received media content information and to return the found media information to the user terminal device.

A media player provided in one embodiment of the present invention includes: a unit configured to receive media content information sent from a user terminal device; a unit configured to search for corresponding media information according to the media content information; and a unit configured to return the found media information to the user terminal device.

A method for locating an IPTV program provided in one embodiment of the present invention includes: receiving media content information sent from a user terminal; and performing a search according to the media content information, and if a media content matching the media content information is found, playing the media from the position of the found media content.

An IPTV system provided in one embodiment of the present invention includes: a user terminal device and a media server. The user terminal device is configured to obtain media content information inputted by a user and to send the media content information to the media server. The media server is configured to perform a search according to the received media content information, and if a media content matching the media content information is found, to play the media from the position of the found media content.

A media server provided in one embodiment of the present invention includes: a unit configured to receive media content information sent from a user terminal device; a unit configured to search for a corresponding media content according to the media content information; and a unit configured to play the media from the position of the found media content when the corresponding media content is found.

The technical solutions of the present invention have the following advantages or advantageous effects. According to the IPTV system, the media server, and methods of searching for and locating an IPTV program in the present invention, a media server is triggered to search for or locate a program according to the media content information inputted by the user. The method is practical and may be easily implemented with fast search speed, and can effectively address the need of the user to search for or locate a program of interest from a program source.

### BRIEF DESCRIPTION OF THE DRAWINGS

Figure 1 is a flowchart showing a method of searching for an IPTV program according to an embodiment of the present invention; and

Figure 2 is a flowchart showing a method for locating an IPTV program according to an embodiment of the present invention.

### DETAILED DESCRIPTION OF THE EMBODIMENTS

The invention is further described in detail with reference to the appended drawings and embodiments, so as to make the objects, technical solutions, and advantages of the embodiments of the present invention more apparent.

In an embodiment of the present invention, a user terminal device receives a movie line inputted by a user and sends the movie line to a media server so as to trigger the media server to start a search. The media server searches a text subtitle file of a media database according to the line inputted by the user, generates a Hypertext Markup Language (HTML) file from found movie information, and sends the HTML file to the user terminal device for the user to make a selection of a desired movie. In addition, during playing of a movie, the user may input a line to be searched for and the media server searches the subtitle of the current movie. If any result is found, a corresponding clip is located and played. Otherwise, the playing of the movie continues from the current position.

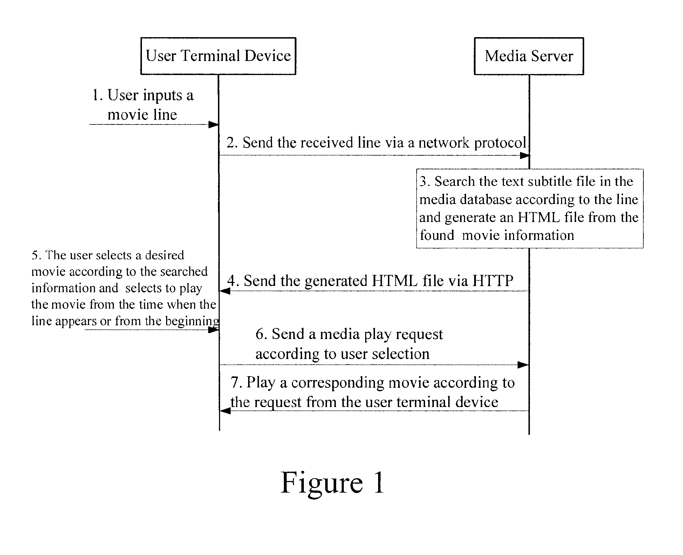

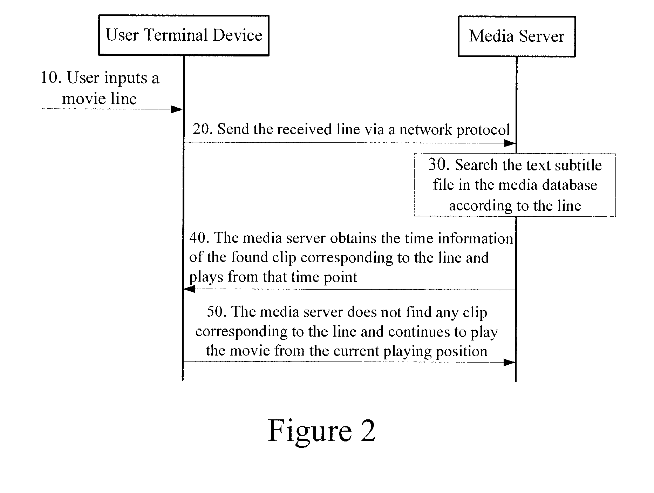

Referring to Figures 1 and 2, an IPTV system according to embodiments of the present invention includes a user terminal device and a media server. The user terminal device receives a movie line inputted by the user and sends the movie line to the media server via a network protocol so as to trigger the media server to start a search. The user terminal device also receives a selection request from the user and sends a play request to the media server. The media server searches a text subtitle file in a media database according to the line inputted by the user, generates an HTML file from the found movie information, returns the HTML file to the user terminal device via Hypertext Transfer Protocol (HTTP), and plays the corresponding movie according to a request from the user terminal device. During playing of the movie, the media server of the IPTV system of the present invention searches the text subtitle file of the corresponding movie according to a line inputted by the user. If any result is found, the time information of the movie clip corresponding to the line is obtained, and the playing starts from that time point. Otherwise, the playing still starts from the current playback position.

Referring to Figure 1, a method of searching for an IPTV program according to an embodiment of the present invention is illustrated.

In step 1, a user inputs a movie line through voice recognition technology or through a device such as a remote control or a keyboard.

In step 2, the user terminal device sends the received line to a media server via a network protocol so as to trigger the media server to start a search.

In step 3, the media server searches a text subtitle file in a media database according to the line inputted by the user, and generates an HTML file from the found movie information. Here, the searching match may be exact match or fuzzy match.

In step 4, the media server returns the HTML file to the user terminal device via HTTP.

In step 5, the user selects a desired movie according to the found information, and the user may choose to play the movie from the time at which the line appears or from the beginning according to the found information, i.e., to play the movie selected by the user from the position in the movie at which the line appears or from the beginning.

In step 6, the user terminal device sends a media play request to the media server according to the user selection.

In step 7, the media server plays a corresponding movie according to the media play request from the user terminal device.

Referring to Figure 2, a method for locating an IPTV program according to an embodiment of the present invention is illustrated.

In step 10, a user inputs a movie line while watching a movie through voice recognition technology or through a device such as a remote control or a keyboard.

In step 20, the user terminal device sends the received line to a media server via a network protocol so as to trigger the media server to start a search.

In step 30, the media server searches a text subtitle file of a corresponding movie according to the line inputted by the user. Here, the searching match may be exact match or fuzzy match.

In step 40, the media server finds a clip corresponding to the line, obtains the time information of the movie clip corresponding to the line, and then plays from that time point. This manner is referred to as located playing.

In step 50, the media server fails to find any clip corresponding to the line, and continues playing the movie from the current playing position.

In step 40 of the above embodiment, there may be a step of determining by the user after the media server finds the clip corresponding to the line, i.e., the user determines whether to play from the found clip.

In the IPTV system, the media server, and the methods of searching for and locating an IPTV program according to the present invention, a media server is triggered to search for or locate a program using the information inputted by the user. The method is practical and may be easily implemented with fast search speed, and can efficiently solve the problem that the user cannot search for or locate a program of interest from a program source quickly. The long and inefficient searching process of a program is avoided, the user experience is improved, and a terminal user may be responded to timely. Moreover, different user needs can be satisfied in that the users may perform selection based on their respective preferences.

The above descriptions are made with reference to preferred embodiments of the present invention and are not intended to limit the present invention. Any modifications, equivalent substitutions, and improvements within the principle of the present invention fall within the claimed scope of the present invention.

## Claims

1. A method of searching for an IPTV program, comprising:
searching for corresponding media information according to media content information sent from a user terminal device, and
returning the found media information to the user terminal device for a user to make a selection.

2. The method of claim 1, further comprising:
receiving a user selection request sent from the user device, and
playing a media requested by the user.

3. The method of claim 1, wherein the media content information comprises a movie line.

4. The method of claim 1, wherein returning the found media information to the user terminal device comprises:
generating a Hypertext Markup Language (HTML) file from the found media information, and
returning the HTML file to the user terminal device via Hypertext Transfer Protocol (HTTP).

5. The method of claim 2, wherein playing the media requested by the user comprises:
playing the media from the time at which the media content information appears; or
playing the media from the beginning.

6. An IPTV system, comprising a user terminal device and a media server, wherein:
the user terminal device is configured to receive media content information inputted by a user and to send the media content information to the media server; and
the media server is configured to search for corresponding media information according to the received media content information and to return the found media information to the user terminal device.

7. The system of claim 6, wherein
the user terminal device is further configured to send a media play request to the media server; and
the media server is further configured to play a corresponding media according to the media play request.

8. The system of claim 6, further comprising: a media database, configured to store media information.

9. A media player, comprising:
a unit configured to receive media content information sent from a user terminal device;
a unit configured to search for corresponding media information according to the media content information; and
a unit configured to return the found media information to the user terminal device.

10. The media player of claim 9, further comprising:
a unit configured to receive a user selection request sent from a user device; and
a unit configured to play a media requested by the user according to the user selection request.

11. A method for locating an IPTV program, comprising:
receiving media content information sent from a user terminal; and
performing a search according to the media content information, and if a media content matching the media content information is found, playing the media from the position of the found media content.

12. The method of claim 11, wherein the media continues being played from the current playing position or is played from the beginning if no media content matching the media content information is found.

13. The method of claim 11, wherein before the media is played from the position of the found media content, the method further comprises:
receiving a user selection request sent from a user device; and
determining the user selection request to select to play from the position of the found media content.

14. The method of claim 11, wherein the media content information comprises a movie line.

15. The method of claim 11, wherein playing the media from the position of the found media content comprises:
obtaining a playing time point of the found media content; and
playing the media from the time point.

16. An IPTV system, comprising a user terminal device and a media server, wherein:
the user terminal device is configured to obtain media content information inputted by a user and to send the media content information to the media server; and
the media server is configured to perform a search according to the received media content information, and if a media content matching the media content information is found, to play the media from the position of the found media content.

17. The system of claim 16, wherein the media server is further configured to continue playing the media from the current playing position or play the media from the beginning when no media content matching the media content information is found.

18. A media server, comprising:
a unit configured to receive media content information sent from a user terminal device;
a unit configured to search for a corresponding media content according to the media content information; and
a unit configured to play the media from the position of the found media content when the corresponding media content is found.

19. The media server of claim 18, further comprising:
a unit configured to continue playing the media from the current playing position when no corresponding media content is found; or
a unit configured to play the media from the beginning when no corresponding media content is found.

20. The media server of claim 18, wherein the unit configured to play the media from the position of the found media content when the corresponding media content is found comprises:
a unit configured to determine whether the user selects to play from the position of the found media content when the corresponding media content is found; and
a unit configured to play the media from the position of the found media content when the user selects to play from the position of the found media content.
